Europäisches Patentamt

European Patent Office

Office européen des brevets

(11) Publication number: **0 395 221**
**A1**

# EUROPEAN PATENT APPLICATION

(21) Application number: **90303290.2**

(22) Date of filing: **28.03.90**

(51) Int. Cl.5: **B01D 53/00, C01B 21/04, B01D 53/36, B01J 19/14, C03B 18/20**

(30) Priority: **29.03.89 US 330235**

(43) Date of publication of application: **31.10.90 Bulletin 90/44**

(84) Designated Contracting States: **BE DE FR GB IT LU NL**

(71) Applicant: **THE BOC GROUP, INC.**
**575 Mountain Avenue**
**Murray Hill New Jersey 07974(US)**

(72) Inventor: **Chambers, Robert Lloyd**
**18223 Tall Cypress**
**Spring, Texas 77388(US)**

(74) Representative: **Wickham, Michael et al**
**c/o Patent and Trademark Department The**
**BOC Group plc Chertsey Road**
**Windlesham Surrey GU20 6HJ(GB)**

(54) **Method of reducing the oxygen concentration in a gas stream.**

(57) A method is provided for reducing the concentration of oxygen contaminant in nitrogen product gas produced by pressure swing adsorption (PSA). The method comprises forming a mixture of PSA nitrogen and a predetermined amount of vaporised anhydrous ammonia, followed by decomposing substantially all of the ammonia to produce nitrogen and hydrogen. The decomposition is accomplished by heating the gas mixture and contacting the heated gas mixture with an effective catalyst for decomposing the ammonia to hydrogen and nitrogen. The hydrogen formed by the decomposition reacts with the oxygen to form water, thereby substantially reducing the concentration of oxygen in the gas composition. This produces a final gas composition containing an acceptable level of oxygen. Sufficient ammonia is decomposed so that only a portion of the resulting hydrogen reacts with the oxygen to form water while the remainder enhances the concentration of hydrogen in the resulting gas composition. The final gas composition is suitable for use as a nitrogen-hydrogen gas mixture to a float glass tank. Such a preferred composition typically consists of 94% nitrogen, 6% hydrogen, and less than 10 p.p.m. oxygen delivered at a dew point of minus 50° F.

FIG. I

EP 0 395 221 A1

## METHOD OF REDUCING THE OXYGEN CONCENTRATION IN A GAS STREAM

This invention relates to a method of reducing the concentration of oxygen in a gas stream, for example nitrogen-rich stream, and, in particular, a PSA nitrogen product stream, and simultaneously enhancing the hydrogen concentration in said stream.

In the production of float glass it is necessary to use a nitrogen-hydrogen gas mixture in the float glass tank to prevent oxidation of the tin bath utilised therein. The typical and preferred nitrogen-hydrogen gas mixture contains about 6% hydrogen, about 94% nitrogen and must have less than 10 p.p.m. oxygen, and a -50°F dew point.

Pressure swing adsorption (PSA) has been used for the continuous production of product gases enriched in one or more of the components of air, most commonly $N_2$. In pressure swing adsorption, the gas to be separated is introduced under components therein. Subsequent reduction of the pressure desorbs the adsorbed component(s) from the adsorbent. See, for examples, US Patents 4,132,766, 4,287,170, and 4,340,578. Conventionally, two or more of such beds are cycled out of phase, thereby providing continuous separation of air.

Typically, the effluent from a pressure swing adsorption (PSA) nitrogen process, produces a nitrogen-rich stream which can contain in excess of 99% nitrogen. The oxygen-rich by-product stream could be combusted with fuel to provide power for the process, e.g., to operate a compressor, or further purified as a product. The nitrogen of the product stream can be further purified with an additional adsorbent or scavenger for the residual oxygen, to provide a pure nitrogen product; see US Patent No. 4,287,170.

It has been proposed to produce the nitrogen-hydrogen gas mixture used in the float glass tank from the nitrogen rich product stream from a pressure swing adsorption process and use ammonia as the source of hydrogen. Conventional PSA nitrogen, however, contains too high an amount of oxygen, i.e., typically about 1% oxygen. If it were possible to utilise PSA nitrogen and a relatively inexpensive source of hydrogen, such as ammonia, there would be a significant reduction in the cost of the nitrogen-hydrogen gas mixture used in the float glass tank.

By utilising the method of this invention applicant can produce a nitrogen-rich, low oxygen-containing gas suitable for use as a component of the nitrogen-hydrogen gas mixture in a float glass tank to prevent oxidation of the tin bath used therein.

There are numerous known processes which utilise ammonia and/or attempt to reduce the oxygen content of a gas stream. For example, US. Patent No. 1,746,209 (Alexander) describes a method whereby the proportions of the constituents of a welding gas mixture may be controlled. In particular, Alexander describes welding in a nitrogen atmosphere in the presence of hydrogen to neutralise the tendency of nitrogen to produce compounds in the presence of small amounts of oxygen which render the welding metal brittle. This is accomplished by the dissociation of ammonia to produce a mixture of 75% hydrogen and 25% nitrogen. Various percentages of nitrogen above this level are produced by mixing air with the mixture of hydrogen and nitrogen resulting from the decomposition of ammonia. The oxygen in the air combines in a burner with a portion of the hydrogen present to give a resulting gas that is a mixture of nitrogen, hydrogen and water vapour. The water vapour may be removed by, for example, condensation. Alexander dissociates the ammonia prior to mixing with the gas composition, e.g., air. In the method described and claimed herein, Applicant mixes the ammonia with the oxygen-containing gas composition prior to decomposition.

US Patent No. 2,806,767 to Chenicek describes a method of removing even trace amounts of oxygen from a gas stream containing inert and/or reducing gases, and in particular describes removing oxygen from ammonia synthesis gas, i.e., a mixture comprising hydrogen and nitrogen, preferably in a volume proportion of three volumes of hydrogen to one volume of nitrogen, and an inert gas such as nitrogen. Chenicek describes contacting the oxygen- containing gas with hydrazine, and in particular aqueous hydrazine. Preferably, the gas is passed in a finely subdivided form through a bath of liquid hydrazine.

US Patent No. 3,053,613 (Anderson) describes a process for effecting combustion reactions of a gas containing oxides of nitrogen and oxygen in which, in a first reaction stage, ammonia is added to the gas. Anderson describes passing a waste gas stream containing several percent by volume of oxygen and several tenths of a percent or more by volume of nitric oxide and nitrogen dioxide, admixed with a quantity of ammonia gas slightly in excess for stoichiometric reaction with the oxides of nitrogen over a catalyst which effects the selective reaction of ammonia and the oxides of nitrogen. The catalyst employed may be palladium, platinum, ruthenium, or other platinum group metals, or cobalt, iron or nickel. Anderson thus describes reducing the oxides of nitrogen, and not oxygen, i.e., the selective reaction of ammonia and the oxides of nitrogen.

US Patent No. 3,821,361 and Canadian Patent No. 902,366 (Walter et al) describes a process for recovery of deuterium from a gas having deuterium values and oxygen bearing impurities by contacting the gas with a solution of sodium or lithium in ammonia to eliminate oxygen bearing impurities as sparingly soluble reaction products.

US Patent No. 3,928,004 (Bligh et al) describes purifying an inert gas, particularly argon, by passage through a bed of molecular sieves at a temperature approaching the boiling point of the inert gas so that the molecular sieve adsorbs the impurity. The bed is then regenerated for reiterating the step for adsorbing the impurity. In this particular case the oxygen is adsorbed onto the molecular sieve.

US Patent No. 4,220,632 (Pence) describes a catalytic reduction of nitrogen oxides by mixing the stream containing such oxides with a gas stream containing ammonia at a temperature of 250° to 550°C. and contacting the same with a zeolite catalyst.

US Patent No. 4,636,670 (Dean et al) describes a method for non-catalytically reducing the concentration of NO in combustion effluent by the injection of ammonia into the effluent stream where the stream is at a temperature of from 975° K. to 1300° K.

US Patent No, 4,735,785 (Eicholtz) describes the removal of oxides of nitrogen from flue gases, and in particular the removal of such oxides by reacting the flue gas in a catalytic bed with ammonia as a reducing agent.

According to the present invention there is provided a method of reducing the concentration of oxygen in a gas stream including oxygen comprising:

forming a gas mixture of said gas stream and an amount of anhydrous ammonia;

decomposing substantially all of the ammonia to form nitrogen and hydrogen;

whereby the hydrogen reacts with the oxygen to form water, thereby reducing the oxygen concentration in said product.

the decomposition is preferably accomplished heating the gas mixture and contacting the heated gas mixture with an effective catalyst for decomposing the ammonia to hydrogen and nitrogen. the hydrogen formed by the decomposition reacts with the oxygen to form water, thereby substantially reducing the concentration of oxygen in the gas composition. this produces a final gas composition containing an acceptable level of oxygen. preferably, the concentration of hydrogen is simultaneously enhanced. this is accomplished by decomposing an excess amount of ammonia so that only a portion of the resulting hydrogen reacts with the oxygen to form water while the remainder enhances the concentration of hydrogen in the resulting gas composition. preferably, the final gas composition is suitable for use as a nitrogen-hydrogen gas mixture to a float glass tank. such a preferred composition typically consists of 94% nitrogen, 6% hydrogen, and less than 10 p.p.m. oxygen delivered at a dew point of minus 50° f.

the method according to the invention will now be described by way of example with reference to the accompanying drawings, in which:

    figure 1 is a process schematic of a preferred embodiment of the process of this invention;
    figure 2 is a process schematic of the reactor used in the process of figure 1; and
    figure 3 is a process schematic of another embodiment of the process of this invention.
    in the ensuing description all percentages are by volume.

Typically a nitrogen-rich product gas obtained from a PSA process for producing nitrogen from air, as described, for example, in US. Patents 4,287,170, and 4,746,502, (Erickson) and US Patent No. 4,565,685 (Cassano), all of which are incorporated herein by reference contains about 99% nitrogen ($N_2$) and about 1% oxygen ($O_2$) by volume, although the oxygen content can be higher or lower, is delivered at about 15 psig and may be used in this invention. Although this is the usual composition obtained from a PSA process, the nitrogen content may typically vary from about 97% to about 99.999%, by volume, and the oxygen content may accordingly vary from about 0.001% to about 3%.

This invention, however, contemplates the use of a gas composition from any source, for example a plant that use membranes to separate air, having varying amounts of nitrogen, oxygen and impurities which do not interfere with the effectiveness of the process. Alternatively, noble gas streams (e.g. argon) containing oxygen may be purified by the method according to the invention. The composition of gases which may be treated in accordance with the invention include those gases containing, by volume, from about 0.001% to 3.0% oxygen, from about 97% to 99.999% nitrogen, the balance being inert gases, e.g., argon, helium and the like. An important feature of this invention is the flexibility thereof with regard to the feed gas composition and the hydrogen content of the product gas.

The process of this invention is performed by forming a gas mixture of the gas composition sought to be purified and an amount of ammonia. Various mixing means well known in the art may be used for mixing the gases.

The preferred type of ammonia is vaporised anhydrous ammonia; however, any gaseous type ammonia

3

from any source may be utilised as long as the impurities therein do not interfere with the process. While ammonia ($NH_3$) is an inexpensive, chemically-pure product, is not complex and dissociates to produce a gaseous mixture suitable for the process herein, it is to be understood that this invention comtemplates the use of other compounds equivalent thereto which dissociate or emit ammonia, or its equivalent. For example, hydrazine ($H_2N-NH_2$) may be dissociated to produce a mixture of nitrogen and hydrogen. Such compounds as are liquid will be vaporised before being mixed with the gas composition to be treated.

The gas mixture is then passed over a catalyst which simultaneously effects the decomposition of the ammonia and the reaction of the resulting hydrogen with the oxygen in the gas composition. Prior thereto, or simultaneously therewith, the gas mixture containing ammonia is heated to a high temperature. Preferred catalysts are DEOXO LD and DEOXO A from Engelhard Industries, Inc. DEOXO LD is an alumina supported palladium deoxidation catalyst. These catalysts were analysed by energy-dispersive x-ray, optical emission, and atomic absorption spectrocopies. The order of major elements in said catalysts are:

DEOXO LD: A1 ≫ Pd > Ca, Ga, Re, Cr

DEOXO A: A1 ≫ Pd, Cu, Ga, Re, Rh, Pt

Oxygen is not listed but is certainly included in the catalyst, for example, as the alumina support. The substitution of rhodium and platinum for chromium and some palladium distinguishes the DEOXO A from the DEOXO LD. This substitution is reflected in both the higher cost of DEOXO A and its performance.

It is also contemplated that other catalysts may be utilised, for example, e.g., iron filings, platinum (sponge or gauze), platinum alloys, rhodium-platinum alloys, gold palladium alloys, platinum-palladium-rhodium alloys, $Fe_2O_3-Mn_2O_3-Bi_2O_3$ catalysts, cobalt oxide, alone or in combination with other oxides such as iron oxide and chromium oxide, supported or unsupported, particularly supported on activated alumina, e.g., palladium supported on pelleted activated alumina.

These catalysts are well known in the art, as well as their method of selection and operating parameters. See, for example, "Heterogeneous Catalysts in Practice", C. N. Satterfield, McGraw Hill Book Co., 1980, the disclosure of which is incorporated herein by reference.

The pressure in the decomposition-reaction stage may be in the range of atmospheric to about 20 psig or more, and the optimum reaction temperatures will generally be different depending on the catalyst employed. Preferably, the pressure of the reaction zone should be in the range of 10 to 15 psig.

The reaction zone temperature may be in the range of 1500 to 2000 degrees F., preferably 1500 to 1700 degrees F. to minimise catalyst evaporation.

Generally, it has been found that selectivity of oxygen removal is optimum in this temperature range.

Optimally, the reaction zone should be at approximately 15 psig and 2000° degrees F. to maximise ammonia conversion when the preferred catalysts are used. Other temperatures and pressures may be utilised; however, this depends on the down-stream process parameters, type of catalysts and compositions of the incoming gas composition to be purified.

The ammonia need not be perfectly balanced with the oxygen content of the stream. This depends on the amount of excess oxygen in the feed stream and the amount of hydrogen required in the product stream.

It is preferred to use at least a stoichiometric amount of ammonia sufficient to reduce all of the oxygen contained in any incoming gas composition. Thus all of the oxygen is reduced to water, no residual hydrogen is added to the system, and the nitrogen content of the final gas mixture is increased. However, in the preferred process wherein the final gas stream is used in the float glass tank to prevent oxidation of the tin bath, it is desired to have a certain amount of hydrogen in the final gas stream, e.g., about 6% hydrogen. It is thus preferred to use an excess amount of ammonia over the theoretical amount required. Thus, the oxygen concentration is reduced and the excess hydrogen resulting from the decomposition of the excess ammonia enhances the amount of hydrogen in the final gas mixture. For example, for a PSA nitrogen stream containing about 1% oxygen the stoichiometric amount of ammonia would be about 2% of the stream (V/V).

Thus, in the reaction stage the ammonia may be added to the gas mixture to be treated in an amount in the range of the stoichiometric quantity required for a reaction with the oxygen, i.e., 200% of the oxygen volume, to ten times or more the quantity required, preferably about three times this quantity to provide 6% hydrogen. The amount of excess ammonia could approach infinity with regard to the oxygen concentration since there would be no adverse effect on the system.

Thus, by the method of this invention, not only is the oxygen content of the incoming gas composition substantially reduced, but the hydrogen content of the gas composition is enhanced. This combination of reducing the oxygen content, while enhancing the hydrogen content of the gas composition is critical to the economic use of the purified PSA process effluent as the source of gas to the float glass tank. The purified PSA process effluent may also be used in the heat treating of metals, the manufacture of heterogeneous catalysts and in the processing of semiconductors.

Subsequently, the final gas composition may be cooled and dried to remove water. It is preferred to use a desiccant or a zeolite molecular sieve to remove the water. However, other processes may be utilised.

The final gas composition produced preferably has a concentration of less than 10 p.p.m. oxygen, about 94% nitrogen, 6% hydrogen and has a dew point of minus 50°F. This is the preferred composition for injecting into the glass float tank process. This composition may, however, range from about 5% to 15% hydrogen, contain up to about 10 p.p.m. oxygen and have a dew point of -50°F. to -100°F. It is contemplated, however, that other different types of compositions of gas streams may be produced by the process of this invention.

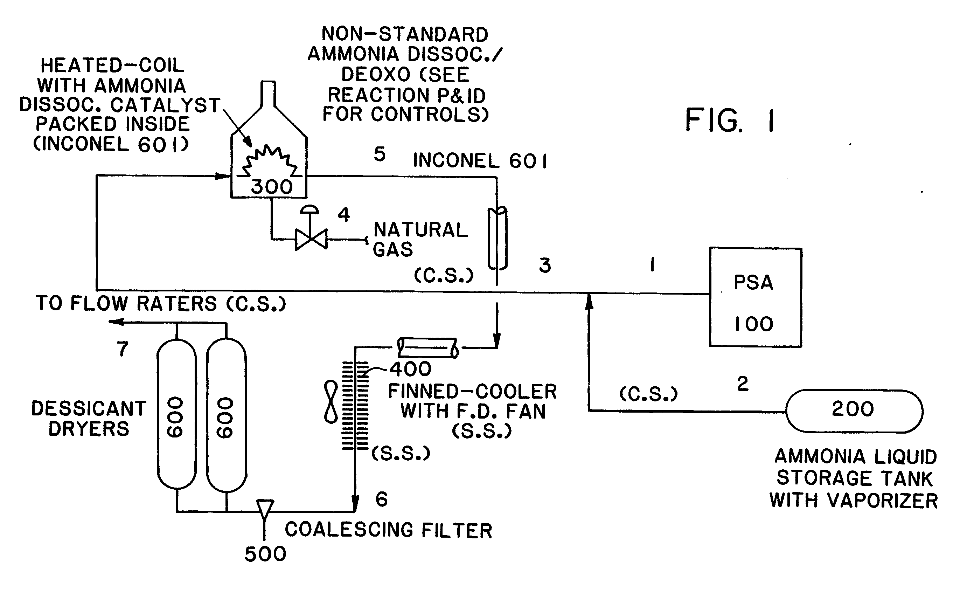

Referring to FIG. 1, which is a flow sheet of the preferred embodiment of this invention, a source of PSA nitrogen which contains about 1% oxygen typically is provided at about 80° F. at a pressure of 15 psig (**Stream 1**). The source of anhydrous ammonia vapour (200) is preferably obtained by vaporising liquefied ammonia. The vaporised ammonia (**Stream 2**) is intermixed with the PSA nitrogen product stream (**Stream 1**) to produce a gas mixture (**Stream 3**), which typically may consist of 94% nitrogen, 5% ammonia and slightly less than 1% oxygen. This gas mixture (**Stream 3**) is injected into a reactor (300). The gas mixture passes through a heating coil packed with the previously described catalyst. The heating coil is preferably made of a high temperature alloy, e.g. INCONEL 601. Natural gas (**Stream 4**) is burned and heats the heating coil containing the gas mixture of ammonia and PSA nitrogen to about 2000° F. The ammonia dissociates liberating hydrogen which reacts with oxygen in the heater coil. The reactor effluent (**Stream 5**) typically containing about 92% nitrogen, 6% hydrogen and 2% water, passes through a finned cooler (400) then through a coalescing filter (500) and driers (600), preferably containing zeolite molecular sieves, whereby substantially all of the water is removed. The drier effluent (Stream 7), which contains about 94% nitrogen, 6% hydrogen and only trace amounts of oxygen, is fed to the float glass tank. Table 1. Attached hereto is an exemplary process design summary for FIG. 1.

TABLE 1

| PROCESS DESIGN SUMMARY FOR FIGURE 1 AND 2 | | | | |
|---|---|---|---|---|
| STREAM | FLOW RATE, SCFH | PRESSURE PSIG | TEMPERATURE °F | COMPOSITION |
| 1 | 11,800 | 15 | 80 (AMB) | $N_2$ - 99% $O_2$ - 1% |
| 2 | 670 | 15 | 100 | $NH_3$ - 100% (VAPOUR) |
| 3 | 12,470 | 15 | 85 | $N_2$ - 94% $NH_3$ - 5% $O_2$ - 1% |
| 4 | 700 | -- | 80 (AMB) | NATURAL GAS - 100% |
| 5 | 13,000 | 13 | 2,000 | $N_2$ - 92% $H_2$ - 6% $H_2O$ - 2% |
| 6 | 13,000 | 13 | 110 | $N_2$ - 92% $H_2$ - 6% $H_2O$ - 2% |
| 7 | 12,760 | 10 | 110 | $N_2$ - 94% $H_2$ - 6% |

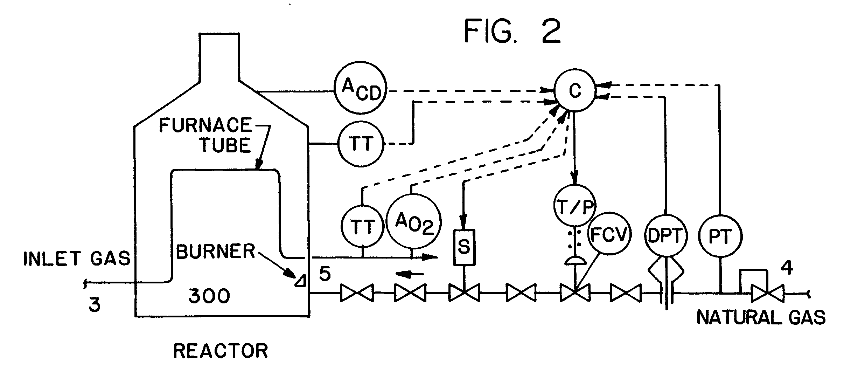

FIG. 2 is a process schematic of reactor (300) showing the inlet gas stream (Stream 3) containing ammonia and PSA nitrogen, a burner for burning the natural gas fed thereto (Stream 5), and the control system therefor.

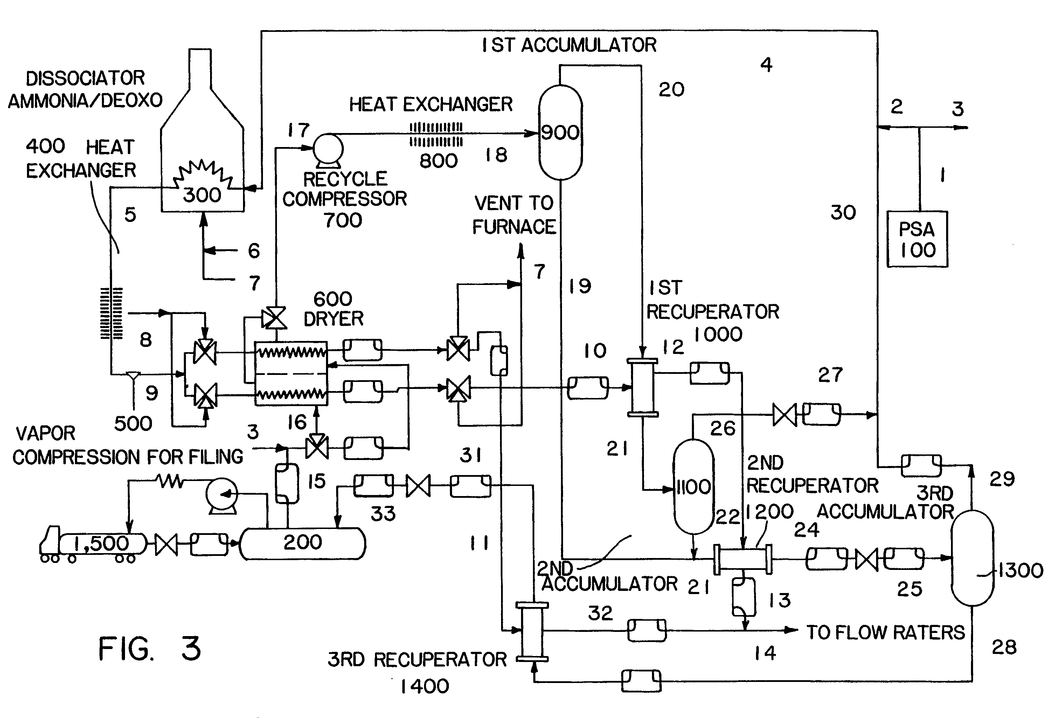

FIG. 3 shows a similar type system with more process details incorporating an open-loop ammonia refrigerant type drying system as described hereinafter. Table 2 is an exemplary Process Design Summary for the process shown in FIG. 3.

In the embodiment depicted in FIG. 3 the purified product (Stream 5) from reactor (300) is initially cooled in heat exchanger (400) and then passed through a coalescing filter (500). The filter effluent, stream 9, is introduced into a drier (600) which functions as a reversing heat exchanger against ammonia stream 16 which is at about -60° F. Stream 9 is thereby cooled to about -50° F. and substantially all of the moisture therein is deposited as ice in the drier (600).

Drier (600) contains two compartments which alternately receive the flow of Stream 9 as it is necessary to periodically remove accumulated ice therefrom before the passages therethrough become clogged. Therefore, by the use of 3-way valves, at timed intervals, the flow of Stream 9 and the cold ammonia Stream 16 are stopped through a particular compartment of drier (600) and Stream 8 is admitted thereto. Stream 8 is withdrawn from an intermediate point of heat exchanger (400). Therefore, its temperature is

5

sufficiently high so that it will effectively melt and remove the accumulated moisture from drier (600) and carry it out as Stream 7 which is vented to the furnace. When the accumulated moisture has been removed, the flows into the compartments will again be reversed. If the moisture is removed from a compartment before the end of the predetermined time period for moisture removal in the other, the flow of Stream 8 thereto will be discontinued and the regenerated compartment allowed to cool.

Stream 16, which is at -60°F., is produced in the following manner: Ammonia is provided at ambient temperature, e.g., about 70°F., and 100 psig by tank truck (1500). The ammonia from truck (1000) passes through a pressure control valve into ammonia storage tank (200). The ammonia storage tank is maintained at a pressure of about 3 psig, i.e., slightly above atmospheric pressure. The ammonia from tank truck (1500) in passing through the pressure relief valve cools by Joule-Thomson cooling, i.e., the liquid ammonia "flashes" or vaporises from 100% liquid at 100 psig to a mixture of liquid and vapour at 2 psig. A portion of the original liquid from tank truck (1500) remains in the ammonia storage tank (200) as liquid ammonia and the remaining vapour in the ammonia storage tank is recompressed and recycled to tank truck (1500). Liquid ammonia from ammonia storage tank 200 (Stream 15) is then mixed with the PSA nitrogen product stream (Stream 3) by injecting Stream 15 into Stream 3 to produce Stream 16. Injection of droplets of liquid ammonia into the PSA nitrogen product stream causes what is termed "mass transfer cooling" wherein a significant portion of the liquid ammonia is vaporised in mixing with the nitrogen stream, causing the total Stream 16 temperature to cool to a temperature of about -60°F. Stream 16 is then passed through drier 600 to cool Stream 9 thereby removing substantially all of the water therefrom.

The refrigeration imparted to product Stream 9 is recovered by means which also recovers ammonia for the ammonia cycle. Stream 16, which is warmed in passage through drier 600 thereby causing vaporisation of all ammonia is introduced into a recycle compressor 700 wherein the pressure is raised to a level such that about one-half of the ammonia will be condensed by passage through a heat exchanger 800. The liquid ammonia is separated from ammonia vapour in a first accumulator 900. The resulting vapour, Stream 20, is introduced into a first recuperator 1000 where it is partially condensed in heat exchange with dry product Stream 10 thereby recovering about 30 percent of the refrigeration imparted to the product stream in drier 600.

The resulting fluid ammonia Stream 21 is again separated in a second accumulator 1100 to form a liquid stream, which is combined with the liquid ammonia formed in first separator 900, and a vapour Stream 26. The combined liquid ammonia streams, Stream 23, is passed in heat exchange with the dry product gas in second recuperator 1200 to recover an additional 13 percent of refrigeration. The product stream, Stream 13, exiting second recuperator 1200 is combined with an additional product stream as will be described and withdrawn.

The liquid ammonia withdrawn from the second recuperator 1200 as Stream 24 is expanded in a Joule-Thomson valve and introduced into a third accumulator 1300 for separation into a liquid Stream 28 and a vapour Stream 29. The vapour stream is combined with the vapour from second accumulator 1100 and introduced into the reactor 300 with the effluent Stream 2 of the PSA unit 100.

The liquid ammonia Stream 28 is introduced into a third recuperator 1400 where an additional 3 percent of refrigeration is recovered in heat exchange with a portion of the dry product Stream 11 exiting the drier 600. This final cooling step is advantageous since it acts to prevent vaporising of any of the ammonia when it is throttled down before re-entering storage tank 200. The net result is that about one-half of the refrigeration expended in drier 600 is recovered, and the ammonia not required for the process, i.e. combining with the PSA effluent for introduction into reactor 300, is recycled back to the storage tank 200 in its original state.

The aforedescribed process for drying purified product Stream 9 is, therefore, comparatively energy efficient, requires no desiccant drying materials and is relatively inexpensive. A primary benefit of this type of drying is that a specific dew point can be achieved, e.g. -40°F. instead of -50°F., by the simple expedient of adjusting the flow of Stream 15 to give the desired result.

### TABLE 2: PROCESS DESIGN SUMMARY FOR FIGURE 3

| STREAM | FLOW RATE, SCFH | PRESSURE PSIG | TEMPERATURE °F | COMPOSITION |
|---|---|---|---|---|
| 1 | 12,920 | 15 | 80 (AMB) | $N_2$ – 99% $O_2$ – 1% |
| 2 | 12,470 | 15 | 80 (AMB) | $N_2$ – 99% $O_2$ – 1% |
| 3 | 450 | 15 | 80 (AMB) | $N_2$ – 99% $O_2$ – 1% |
| 4 | 13,600 | 15 | 74 | $N_2$ – 94% $O_2$ – 1% $NH_3$ – 5% |
| 5 | 13,900 | 13 | 2,000 | $N_2$ – 93% $H_2$ – 5% $H_2O$ – 2% |
| 6 | 700 | 12 | 80 (AMB) | NATURAL GAS – 100% |
| 7 | 1,400 | 12 | 170 | $N_2$ – 77% $H_2$ – 5% $H_2O$ – 18% |
| 8 | 1,200 | 13 | 1,000 | $N_2$ – 93% $H_2$ – 5% $H_2O$ – 2% |
| 9 | 12,700 | 13 | 110 | $N_2$ – 93% $H_2$ – 5% $H_2O$ – 2% |
| 10 | 10,100 | 12 | −50 | $N_2$ – 94% $H_2$ – 6% |
| 11 | 2,400 | 12 | −50 | $N_2$ – 94% $H_2$ – 6% |
| 12 | 10,100 SCFH | 11 | 44 | $N_2$ – 94% $H_2$ – 6% |
| 13 | 10,100 SCFH | 10 | 57 | $N_2$ – 94% $H_2$ – 6% |
| 14 | 12,500 SCFH | 10 | 43 | $N_2$ – 94% $H_2$ – 6% |
| 15 | 150 LB/HR | 3 | −20 | $NH_3$ – 100% (LIQ.) |
| 16 | 183 LB/HR | 3 | −60 | $NH_3$ – 30% (V), 100% (LIQ.) $N_2$ – 70% (450 SCFH) |
| 17 | 3940 SCFH | 2 | 90 | $NH_3$ – 89% $N_2$ – 11% |
| 18 | 183 LB/HR | 260 | 100 | $NH_3$ – 78% (V), 100% (LIQ.) $N_2$ – 22% (450 SCFH) |
| 19 | 77 LB/HR | 260 | 100 | $NH_3$ – 100% (LIQ.) |
| 20 | 2070 SCFH | 260 | 100 | $NH_3$ – 78% $N_2$ – 22% |

## TABLE 2: PROCESS DESIGN SUMMARY FOR FIGURE 3

| STREAM | FLOW RATE, SCFH | PRESSURE PSIG | TEMPERATURE °F | COMPOSITION |
|---|---|---|---|---|
| 21 | 110 LB/HR | 260 | 65 | $NH_3$ – 44% (V), 100% (LIQ.) $N_2$ – 56% (450 SCFH) |
| 22 | 58 LB/HR | 260 | 65 | $NH_3$ – 100% (LIQ.) |
| 23 | 135 LB/HR | 260 | 85 | $NH_3$ – 100% (LIQ.) |
| 24 | 135 LB/HR | 260 | 59 | $NH_3$ – 100% (LIQ.) |
| 25 | 135 LB/HR | 15 | 0 | $NH_3$ – 100% (V) (350 SCFH), $NH_3$ – 100% (LIQ.) |
| 26 | 800 SCFH | 260 | 65 | $NH_3$ – 44% $N_2$ – 56% |
| 27 | 800 SCFH | 15 | 35 | $NH_3$ – 44% $N_2$ – 56% |
| 28 | 120 LB/HR | 15 | 0 | $NH_3$ – 100% (LIQ.) |
| 29 | 350 SCFH | 15 | 0 | $NH_3$ – 100% (V) |
| 30 | 1150 SCFH | 15 | 23 | $NH_3$ – 61% $N_2$ – 39% |
| 31 | 120 SCFH | 15 | –20 | $NH_3$ – 100% (LIQ.) |
| 32 | 2400 SCFH | 10 | –15 | $N_2$ – 94% $H_2$ – 6% |
| 33 | 120 LB/HR | 3 | –20 | $NH_3$ – 100% (LIQ.) |

**Claims**

1. A method of reducing the concentration of oxygen in a gas stream including oxygen comprising: forming a gas mixture of said gas stream and an amount of anhydrous ammonia; decomposing substantially all of the ammonia to form nitrogen and hydrogen; whereby the hydrogen reacts with the oxygen to form water, thereby reducing the oxygen concentration in said product.

2. A method according to claim 1 in which the gas stream is a product produced by pressure swing adsorption.

3. A method according to Claim 2, wherein a controlled amount of ammonia is admixed with a controlled amount of product stream so that only a portion of the hydrogen formed reacts with the oxygen thereby producing a purified product stream containing a reduced concentration of oxygen and an enhanced concentration of hydrogen.

4. A method as claimed in any one of the preceding claims, wherein the concentration of oxygen in the nitrogen product stream is less than about three per cent.

5. A method as claimed in an one of the preceding claims, wherein the gas mixture is heated to 2000°F to decompose the ammonia.

6. A method according to any one of the preceding claims, wherein the oxygen concentration in the purified product stream is less than 10 p.p.m.

7. A method according to any one ofo the preceding, wherein the purified product has a dew point of minus 50°F.

8. A method as claimed in any one of the preceding claims, additionally including drying the purified product stream.

9. A method according to Claim 8, wherein the step of drying comprises cooling the purified product stream by passing it in heat exchange with said mixture of a nitrogen pressure swing adsorption product stream and anhydrous ammonia prior to decomposition of the ammonia therein, wherein said mixture is sufficiently cold to condense the water in the purified product stream.

10. A method according to Claim 9, wherein the drying is carried out in a reversing heat exchanger and regeneration thereof is carried out by passage therethrough of a portion of the purified product gas at a temperature sufficient to remove accumulated water therein.

FIG. 1

HEATED-COIL WITH AMMONIA DISSOC. CATALYST PACKED INSIDE (INCONEL 601)

NON-STANDARD AMMONIA DISSOC./ DEOXO (SEE REACTION P&ID FOR CONTROLS)

5    INCONEL 601

300

4    NATURAL GAS

(C.S.)    3    1

PSA 100

TO FLOW RATERS (C.S.)

7

DESSICANT DRYERS

600    600

~400

FINNED-COOLER WITH F.D. FAN (S.S.)

(C.S.)    2

200

(S.S.)

6

COALESCING FILTER

500

AMMONIA LIQUID STORAGE TANK WITH VAPORIZER

EP 0 395 221 A1

FIG. 2

NATURAL GAS

4

PT

DPT

FCV

T/P

C

S

$A_{O_2}$

$A_{CD}$

TT

TT

5

FURNACE TUBE

BURNER

300

REACTOR

3

INLET GAS

FIG. 3

EP 0 395 221 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 10, no. 4 (C-322)[2061], 9th January 1986, page 162 C 322; & JP-A-60 166 206 (TAIYOU SANSO K.K.) 29-08-1985 * Whole abstract * | 1,2 | B 01 D 53/00 C 01 B 21/04 B 01 D 53/36 B 01 J 19/14 C 03 B 18/20 |
| A | IDEM | 4-7 | |
| X | GB-A- 446 435 (J. JOHNSON) * Examples 1,2 * | 1,3,5 | |
| A | GB-A-1 004 741 (BRITISH OXYGEN CO.) * Claims 1-4 * | 1,8-10 | |
| A | US-A-3 598 518 (E. GOTO) * Claim 1 * | 1,8-10 | |
| A | US-A-3 970 442 (J. GULOTTA) * Claims 1-3 * | | |
| A,D | US-A-1 746 209 (P. ALEXANDER) | | TECHNICAL FIELDS SEARCHED (Int. Cl.5) |
| A,D | US-A-3 053 613 (H. ANDERSON) | | B 01 D B 01 J C 01 B C 03 B |

The present search report has been drawn up for all claims

| Place of search | Date of completion of the search | Examiner |
|---|---|---|
| THE HAGUE | 27-07-1990 | KANOLDT W.W. |